# EUROPEAN PATENT APPLICATION

(11) **EP 3 750 705 A1**
(43) Date of publication of application: **16.12.2020**
(21) Application number: 19179759.6
(22) Date of filing: 12.06.2019
(51) Int. Cl.: B32B 5/12, B29C 70/20, B32B 3/08, B32B 3/12, B32B 5/26, B32B 5/28

(54) **THIN, HIGH-STIFFNESS LAMINATES AND ARTICLES INCLUDING THE SAME**

(71) Applicant: SABIC Global Technologies B.V., 4612 PX Bergen op Zoom (NL)
(72) Inventor: RIETMAN, Albert Dirk, 4612 PX Bergen op Zoom (NL); MUHAMMAD, Kashif Syed, 4612 PX Bergen op Zoom (NL)
(74) Representative: J A Kemp LLP

(57) **Abstract**

This disclosure includes laminates and portable electronic device housings including the same. Some laminates have a length, a width that is perpendicular to the length, and a stack of laminae, each including a matrix material and fibers that are dispersed within the matrix material and aligned in one of a first direction, a second direction that is angularly disposed relative to the first direction by a first angle that is between 10 and 80 degrees, and a third direction that is angularly disposed relative to the first direction by a second angle that is equal and opposite to the first angle, wherein, for each of the directions, at least one of the laminae includes fibers that are aligned in the direction, and wherein none of the laminae includes fibers that are aligned in a fourth direction that is perpendicular to the first direction.

## Description

### BACKGROUND

### 1. Technical Field

The present invention relates generally to fiber-reinforced laminates, and more specifically, but not by way of limitation, to triaxial fiber-reinforced laminates that may be suitable for use in portable electronic device ("PED") housings.

### 2. Description of Related Art

Fiber-reinforced laminates can be used to form structures having advantageous structural characteristics, such as high stiffnesses and high strengths, as well as relatively low weights, when compared to structures formed from conventional materials. As a result, fiber-reinforced laminates are used in a variety of applications across a range of industries, including the automotive, aerospace, and consumer electronics industries.

In many applications, the use of fiber-reinforced laminates to increase the stiffness of a structure can be limited by the size, weight, and/or cost requirements of the structure. For example, a typical PED includes a housing for receiving components (e.g., a screen, processor, board, user-input device, other component, and/or the like) of the device that needs to be sufficiently stiff to protect the components against damage, while being relatively small (e.g., thin-walled), light, and inexpensive. Fiber-reinforced laminates for use in such applications that are sufficiently thin may not be as stiff as desired, and those that are sufficiently stiff may not be as thin or inexpensive as desired.

### SUMMARY

One technique to produce a high-stiffhess, fiber-reinforced laminate involves layering several laminae of several fiber orientations; for example, 0-, 90-, +45-, and -45-degree laminae. While such a laminate may be sufficiently stiff, using such differing-fiber-orientation laminae can increase manufacturing complexity and cost and can render the laminate undesirably thick. Further, it may be necessary that those laminae have differing thicknesses in order to balance the laminate's stiffness and thickness requirements, increasing the materials needed (e.g., a unidirectional tape for each lamina thickness) to produce the laminate.

Some embodiments of the present laminates can be relatively stiff as well as relatively thin and/or inexpensive by having a reduced number of fiber orientations or a reduced number of laminae having such fiber orientations. Such a laminate can include, for example, laminae having fibers aligned in: (1) a first direction, but not a direction that is perpendicular to the first direction; (2) a second direction that is angularly disposed relative to the first direction by a first angle that is between 10 and 80 degrees; and (3) a third direction that is angularly disposed relative to the first direction by a second angle that is equal and opposite to the first angle (a "triaxial" laminate). In some triaxial laminates, each of the laminae can have substantially the same thickness; thus, such laminates can be produced using relatively few materials (e.g., each of the laminae can be made from the same unidirectional tape).

Such a laminate can include laminae having fibers aligned in the first direction, the second direction, and the third direction, as well as a relatively small amount-in number and/or thickness-of laminae having fibers aligned in the fourth direction. To illustrate, one(s) of the laminae having fibers aligned in the fourth direction can account for (i.e., have a collective thickness that is) less than or equal to any one of, or between any two of: 15, 14, 13, 12, 11, 10, 9, 8, 7, 6, 5, 4, 3, 2, or 1% of the thickness of the laminate. To further illustrate, in some laminates, only 1, 2, or 3 laminae include fibers aligned in the fourth direction.

The terms "a" and "an" are defined as one or more unless this disclosure explicitly requires otherwise. The term "substantially" is defined as largely but not necessarily wholly what is specified (and includes what is specified; e.g., substantially 90 degrees includes 90 degrees and substantially parallel includes parallel), as understood by a person of ordinary skill in the art. In any disclosed embodiment, the terms "substantially" and "approximately" may be substituted with "within [a percentage] of" what is specified, where the percentage includes .1, 1, 5, and 10 percent.

The phrase "and/or" means and or or. To illustrate, A, B, and/or C includes: A alone, B alone, C alone, a combination of A and B, a combination of A and C, a combination of B and C, or a combination of A, B, and C. In other words, "and/or" operates as an inclusive or.

Further, a laminate, device, or system that is configured in a certain way is configured in at least that way, but it can also be configured in other ways than those specifically described.

The terms "comprise" (and any form of comprise, such as "comprises" and "comprising"), "have" (and any form of have, such as "has" and "having"), and "include" (and any form of include, such as "includes" and "including") are open-ended linking verbs. As a result, an apparatus that "comprises," "has," or "includes" one or more elements possesses those one or more elements, but is not limited to possessing only those one or more elements. Likewise, a method that "comprises," "has," or "includes" one or more steps possesses those one or more steps, but is not limited to possessing only those one or more steps.

Any embodiment of any of the laminates, apparatuses, systems, and methods can consist of or consist essentially of-rather than comprise/have/include-any of the described steps, elements, and/or features. Thus, in any of the claims, the term "consisting of' or "consisting essentially of' can be substituted for any of the open-ended linking verbs recited above, in order to change the scope of a given claim from what it would otherwise be using the open-ended linking verb.

The feature or features of one embodiment may be applied to other embodiments, even though not described or illustrated, unless expressly prohibited by this disclosure or the nature of the embodiments.

Some details associated with the embodiments are described above and others are described below.

### BRIEF DESCRIPTION OF THE DRAWINGS

The following drawings illustrate by way of example and not limitation. For the sake of brevity and clarity, every feature of a given structure is not always labeled in every figure in which that structure appears. Identical reference numbers do not necessarily indicate an identical structure. Rather, the same reference number may be used to indicate a similar feature or a feature with similar functionality, as may non-identical reference numbers.
**FIG. 1** is a perspective view of a first embodiment of the present laminates.
**FIGs. 2A-2C** are top views of laminae that may be suitable for use in some of the present laminates.
**FIG. 3A** is an exploded view of the laminate of FIG. 1.
**FIG. 3B** is a cross-sectional end view of the laminate of FIG. 1, taken along line 3B-3B of FIG. 1.
**FIG. 3C** is a cutaway perspective view of the laminate of FIG. 1.
**FIG. 4A** is an exploded view of a second embodiment of the present laminates.
**FIG. 4B** is a cross-sectional side view of the laminate of FIG. 4A.
**FIG. 4C** is a cross-sectional end view of the laminate of FIG. 4A.
**FIG. 4D** is a cutaway perspective view of the laminate of FIG. 4A.
**FIG. 5A** is an exploded view of a third embodiment of the present laminates.
**FIG. 5B** is a cutaway perspective view of the laminate of FIG. 5A.
**FIG. 6** depicts one embodiment of the present articles that includes one or more of the present laminates.
**FIG. 7** is a perspective view of a laptop housing that includes one or more of the present laminates.
**FIG. 8A** is bottom view of the A-cover of the laptop housing of FIG. 7.
**FIG. 8B** is a cross-sectional side view of the A-cover of FIG. 8A, taken along line 8B-8B of FIG. 8A.
**FIGs. 9A** and **9B** depict conditions for simulating the deflection of a laminate in response to a load.
**FIG. 10** is a cross-sectional view of Laminate 1.
**FIG. 11** is a graph showing the maximum deflection of Laminate 1 when subjected to the conditions of FIGs. 9A and 9B.
**FIGs. 12A-12I** are cross-sectional views of Laminates 2-10, respectively.
**FIG. 13** is a graph comparing the maximum deflections of Laminates 2-10 with the maximum deflection of Laminate 1 (indicated by the dashed line) when each is subjected to the conditions of FIGs. 9A and 9B.
**FIGs. 14A** and **14B** are cross-sectional views of Laminates 11 and 12.
**FIG. 15** is a graph comparing the maximum deflections of Laminates 11 and 12 with the maximum deflection of Laminate 1 (indicated by the dashed line) when each is subjected to the conditions of FIGs. 9A and 9B.

### DETAILED DESCRIPTION

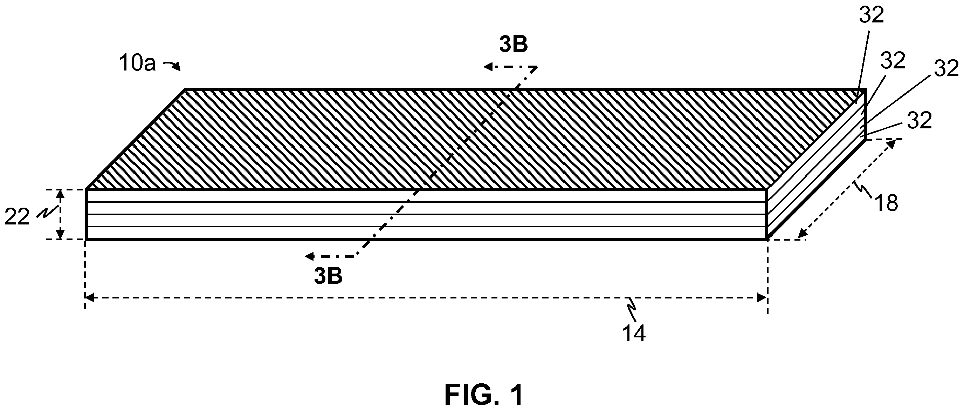

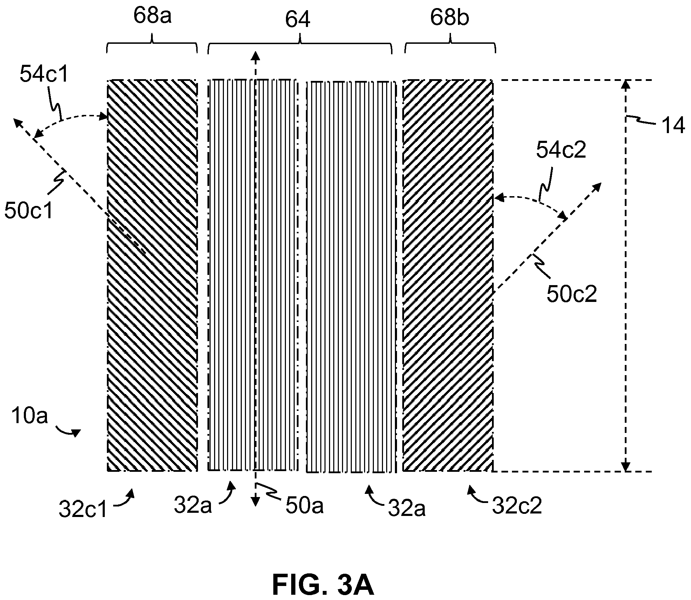

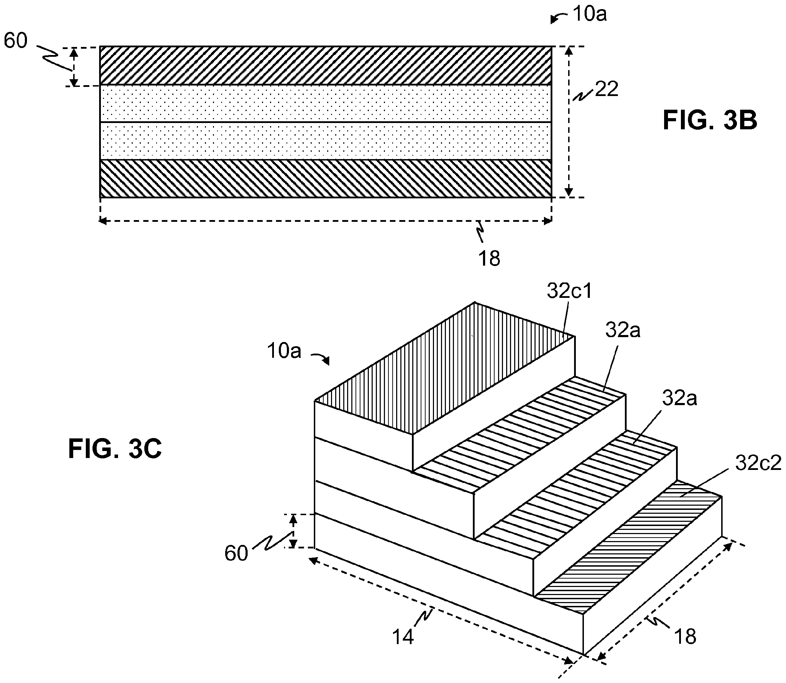

The present laminates can be used in a variety of articles in which a thin, high-stiffness laminate is desirable, including, for example, automotive, aircraft, consumer electronics, and/or the like components. Provided by way of illustration, FIGs. 1 and 3A-3C depict a first embodiment 10a of the present laminates that is configured for use in a PED housing, and more particularly, a laptop housing. Of course, the present laminates can be used in other PED housings, such as, for example, mobile phone, digital assistant, pager, tablet, media player, handheld gaming device, camera, watch, navigation device, and/or the like housings.

The present laminates can be dimensioned and shaped according to their respective articles. For example, laminate 10a includes a length 14 and a width 18 that is perpendicular to and smaller than or equal to the length. Length 14 and width 18 are each a distance measured between outer edges of the laminate along a straight line; the length can, but need not, be the largest such distance. Length 14 can be greater than or substantially equal to any one of, or between any two of: 25, 26, 27, 28, 29, 30, 31, 32, 33, 34, or 35 centimeters (cm) (e.g., approximately 33.5 cm) and/or greater than or substantially equal to any one of, or between any two of: 1.10, 1.15, 1.20 1.25, 1.30, 1.35, 1.40, 1.45, 1.50, 1.55, 1.60, 1.65, 1.70, 1.75, or 1.80 times width 18 (e.g., between approximately 1.3 and approximately 1.7 times the width or approximately 1.45 times the width). And width 18 can be greater than or substantially equal to any one of, or between any two of: 14, 15, 16, 17, 18, 19, 20, 21, 22, 23, 24, 25, 26, 27, 28, 29, or 30 cm (e.g., approximately 23 cm).

Laminate 10a has a thickness 22 that is measured perpendicularly to both length 14 and width 18. Thickness 22 can be less than or substantially equal to any one of, or between any two of: 0.5, 0.6, 0.7, 0.8, 0.9, 1.0, 1.1, 1.2, 1.3, 1.4, 1.5, 1.6, 1.7, 1.8, 1.9, or 2.0 millimeters (mm) (e.g., approximately 0.9 mm). For laminate 10a, thickness 22 is substantially uniform throughout the laminate; however, other embodiments of the present laminates can have varying thicknesses. As described below, the present laminates-at least via selection of their respective laminae-can have relatively high resistances to deflection at such relatively low thicknesses.

Laminate 10a is rectangular; however, other embodiments of the present laminates can be triangular, square, or otherwise polygonal (whether having sharp and/or rounded corners), circular, elliptical, or otherwise rounded, or can have an irregular shape. Some of the present laminates can include one or more openings, notches, and/or the like, which can facilitate incorporation of the laminate into an article. To illustrate, if the article is a PED housing, such opening(s), notch(es), and/or the like can allow for mounting and/or operation of other component(s) (e.g., button(s), other user-input device(s), camera(s), and/or the like) of the PED.

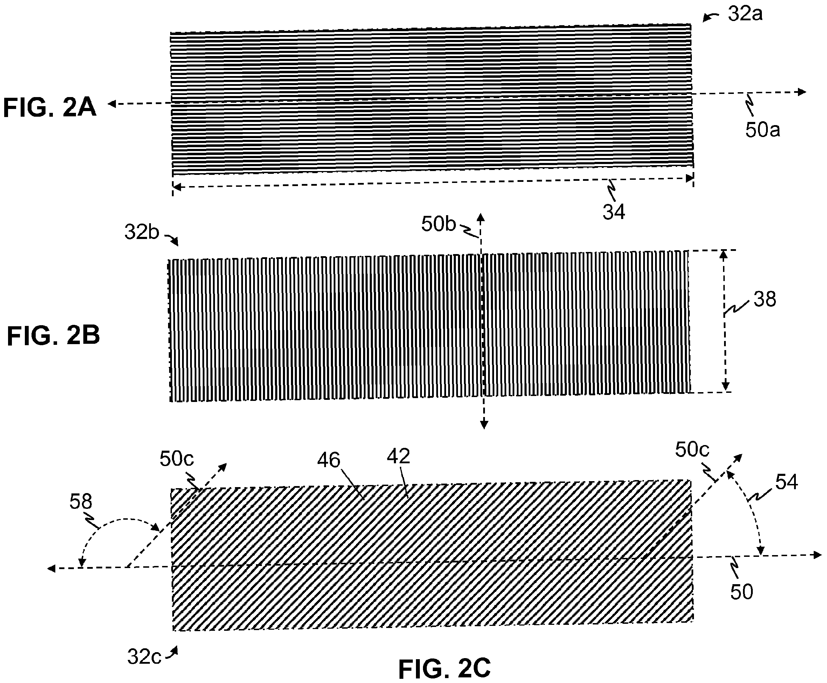

Laminate 10a includes a stack of laminae 32 that have been consolidated (e.g., using heat and/or pressure). Each of laminae 32 has a length (e.g., 34, FIG. 2A) and a width (e.g., 38, FIG. 2B) that is perpendicular to and smaller than or equal to the length, where the length and the width are each a distance between outer edges of the lamina measured along a straight line. Length 34 can, but need not, be the largest such distance. In laminate 10a, each of laminae 32 has a shape and dimensions that correspond to the shape and dimensions of the laminate. For example, length 34 and width 38 of each of laminae 32 can be aligned with and substantially equal to length 14 and width 18, respectively, of laminate 10a. As used herein, "aligned with" means within 10 degrees of parallel to. For further example, each of laminae 32 can have a largest planform area that is substantially equal to a largest planform area of laminate 10a. In other embodiments, one or more laminae of a laminate can have a shape and/or dimensions that differ from the shape and/or dimensions of the laminate; such lamina(e) can, for example, be used to add stiffness and strength to a portion of the laminate that is smaller than the entirety of the laminate.

Each of laminae 32 includes fibers 42 dispersed within a matrix material 46. Fibers (e.g., 42) of the present laminates (e.g., 10a, 10b, 10c, and/or the like) can include any suitable fibers, such as, for example, carbon fibers, glass fibers, aramid fibers, polyethylene fibers, polyester fibers, polyamide fibers, ceramic fibers, basalt fibers, steel fibers, and/or the like. Within a given laminate (or lamina thereof), the fibers can-but need not-be of the same type. Laminae (e.g., 32) including fibers (e.g., 42) can have a pre-consolidation fiber volume fraction that is greater than or substantially equal to any one of, or between any two of: 40, 45, 50, 55, 60, 65, 70, 75, or 80%. To be clear, however, not all laminae of the present laminates need include fibers (e.g., 42); such laminae that do not include fibers can, for example, comprise a sheet of matrix material (e.g., 46).

Matrix materials (e.g., 46) of the present laminates can include thermoplastic and/or thermoset materials. For example, a suitable thermoplastic material can include polyethylene terephthalate, polycarbonate (PC), polybutylene terephthalate (PBT), poly(1,4-cyclohexylidene cyclohexane-1,4-dicarboxylate) (PCCD), glycol-modified polycyclohexyl terephthalate (PCTG), poly(phenylene oxide) (PPO), polypropylene (PP), polyethylene (PE), polyvinyl chloride (PVC), polystyrene (PS), polymethyl methacrylate (PMMA), polyethyleneimine or polyetherimide (PEI) or a derivative thereof, a thermoplastic elastomer (TPE), a terephthalic acid (TPA) elastomer, poly(cyclohexanedimethylene terephthalate) (PCT), polyethylene naphthalate (PEN), a polyamide (PA), polystyrene sulfonate (PSS), polyether ether ketone (PEEK), polyether ketone ketone (PEKK), acrylonitrile butyldiene styrene (ABS), polyphenylene sulfide (PPS), a copolymer thereof, or a blend thereof. For further example, a suitable thermoset material can include an unsaturated polyester resin, a polyurethane, bakelite, duroplast, urea-formaldehyde, diallylphthalate, epoxy resin, an epoxy vinylester, a polyimide, a cyanate ester of a polycyanurate, dicyclopentadiene, a phenolic, a benzoxazine, a co-polymer thereof, or a blend thereof.

The present laminates can achieve a relatively high resistance to deflection at a relatively low thickness, complexity, cost, and/or weight at least via selection of their respective laminae and the lay-up thereof. To illustrate, fibers 42 of each of laminae 32 are aligned in one or more fiber directions (e.g., 50a, 50b, and/or 50c). For a unidirectional lamina-each of laminate 10a's laminae 32 is unidirectional-the fibers are aligned in a single fiber direction, and, for a woven lamina, the fibers are aligned in two or more fiber directions. To attain such advantageous characteristics, the present laminates can include laminae having fibers aligned in: (1) a first direction, but not a direction that is perpendicular to the first direction; (2) a second direction that is angularly disposed relative to the first direction by a first angle that is between 10 and 80 degrees; and (3) a third direction that is angularly disposed relative to the first direction by a second angle that is equal and opposite to the first angle. This is in contrast to certain traditional laminates that require at least four fiber directions 50, such as those including 0- and 90-degree lamina(e) as well as off-axis lamina(e) having at least two fiber directions (e.g., +45- and -45-degree lamina(e)).

Nevertheless, included in the scope of this disclosure are laminates comprising laminae having fibers aligned in the first, second, and third directions as well as a relatively small amount-in number and/or thickness-of laminae having fibers aligned in the fourth direction. To illustrate, one(s) of the laminae having fibers aligned in the fourth direction can account for less than or equal to any one of, or between any two of: 15, 14, 13, 12, 11, 10, 9, 8, 7, 6, 5, 4, 3, 2, or 1% of the thickness (e.g., 22) of the laminate.

For example, and referring additionally to FIGs. 2A-2C, laminate 10a can include either: (1) one or more unidirectional laminae 32a, each having a fiber direction 50a parallel to length 14 of the laminate (e.g., 0-degree unidirectional laminae, FIG. 2A); or (2) one or more unidirectional laminae 32b, each having a fiber direction 50b parallel to width 18 of the laminate (e.g., 90-degree unidirectional laminae, FIG. 2B). In this instance, the first direction would be fiber direction 50a or fiber direction 50b. Laminate 10a can also include first and second laminae 32c (FIG. 2C) having fiber directions 50c that are angularly disposed relative to fiber direction 50a or 50b (indicated as fiber direction 50 in FIG. 2C), as the case may be, by equal and opposite angles 54 (e.g., off-axis laminae). Fiber directions 50c, in this case, are the second and third directions. As used herein, the angle between two fiber directions is the smallest such angle (neglecting its sign); to illustrate, as shown in FIG. 2C, fiber directions 50c and 50 form supplementary angles 54 and 58, but the smallest such angle-54-is used to characterize their relative orientation. For laminae 32c, angle 54's magnitude can be, for example, substantially equal to any one of, or between any two of: 10, 15, 20, 25, 30, 35, 40, 45, 50, 55, 60, 65, 70, 75, or 80 degrees (e.g., between approximately 35 degrees and approximately 55 degrees, approximately 56 degrees, approximately 45 degrees and/or the like).

Provided by way of illustration, as shown in FIGs. 3A-3C, laminate 10a can include two 0-degree unidirectional laminae 32a and two off-axis laminae, 32c1 and 32c2. Fiber direction 50c1 of lamina 32c1 can be angularly disposed relative to fiber direction 50a of lamina 32a by an angle 54c1 of approximately -56 degrees, and fiber direction 50c2 of lamina 32c2 can be angularly disposed relative to fiber direction 50a by an angle 54c2 of approximately 56 degrees.

While laminate 10a's laminae 32 are each unidirectional, other of the present laminates can include one or more woven laminae. Such a woven lamina can, for example, have the same fiber directions as-and may be used in lieu of-the first and second laminae 32c described above. The present laminates can also include non-woven laminae, such as those having fibers arranged in a mat, which are not considered herein to have a fiber direction; for the avoidance of doubt, the presence of a non-woven lamina has no impact on whether a laminate is triaxial. That laminate 10a includes at least one lamina (e.g., 32a or 32b) having a fiber direction (e.g., 50a or 50b) aligned with one of length 14 and width 18 of the laminate is not limiting; the present laminates need not include 0-degree or 90-degree lamina(e). Also non-limiting is the number of laminae 32 in laminate 10a, as other of the present laminates can include any suitable number of laminae (e.g., 2, 3, 4, 5, 6, or more laminae, including one or more of lamina 32a or 32b, two or more of lamina 32c, and/or the like).

As shown, the present laminates can each include an inner section (e.g., 64) and first and second outer sections (e.g., 68a and 68b, respectively) disposed on opposing sides of the inner section. In such laminates, one or more of-up to and including each of-the laminae having fibers aligned in the first direction (e.g., lamina 32a) can be disposed within the inner section. And one or more of-up to including each of-the laminae having fibers aligned in the second direction and/or third direction (e.g., laminae 32c) can be disposed within the outer sections. All else being equal, such a lay-up may increase the laminate's resistance to deflection. While laminate 10a is asymmetrical, other laminates can be symmetrical.

Laminae (e.g., 32) of the present laminates can each have any suitable thickness (e.g., 60), whether measured pre- or post-consolidation, such as, for example, one that is greater than or substantially equal to any one of, or between any two of: 0.08, 0.09, 0.10, 0.11, 0.12, 0.13, 0.14, 0.15, 0.16, 0.17, 0.18, 0.19, 0.20, 0.21, 0.22, 0.23, 0.24, 0.25, 0.30, 0.35, 0.40, 0.45, or 0.50 mm. In laminate 10a, thickness 60 of each of laminae 32 is substantially the same. In this way, the materials needed to produce the laminate can be advantageously reduced; for example, each of the laminae can be made using the same unidirectional tape. Nevertheless, in other of the present laminates, the laminae can have thicknesses that vary relative to one another.

A thickness of inner section 64 (e.g., the sum of thicknesses 60 of laminae 32a) can be approximately equal to a thickness of first outer section 68a (e.g., thickness 60 of lamina 32c1) plus a thickness of second outer section 68b (e.g., thickness 60 of lamina 32c2). In laminate 10a, this is accomplished via inner section 64 having twice as many laminae as each of outer sections 68a and 68b, and each of the laminae having substantially the same thickness; however, in laminates having laminae of differing thicknesses, such a lay-up can be accomplished by selecting the number of the laminae in each of the inner and outer sections. These and similar lay-ups may provide a laminate with increased resistance to deflection.

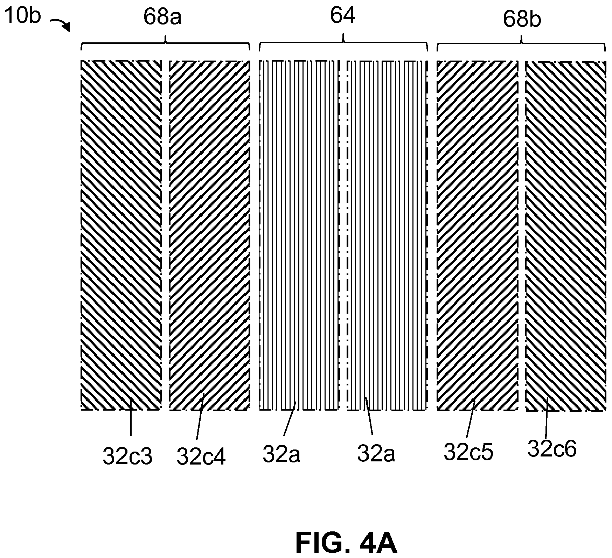

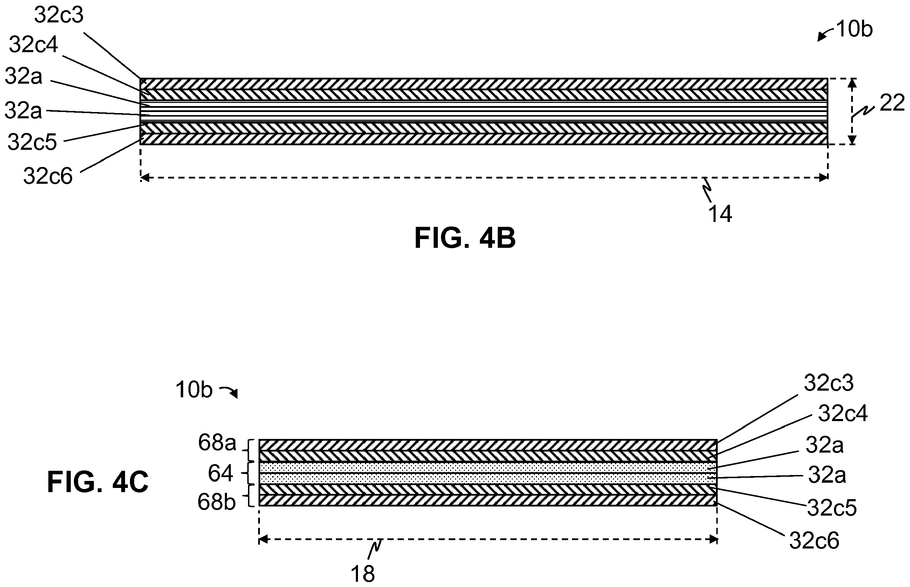

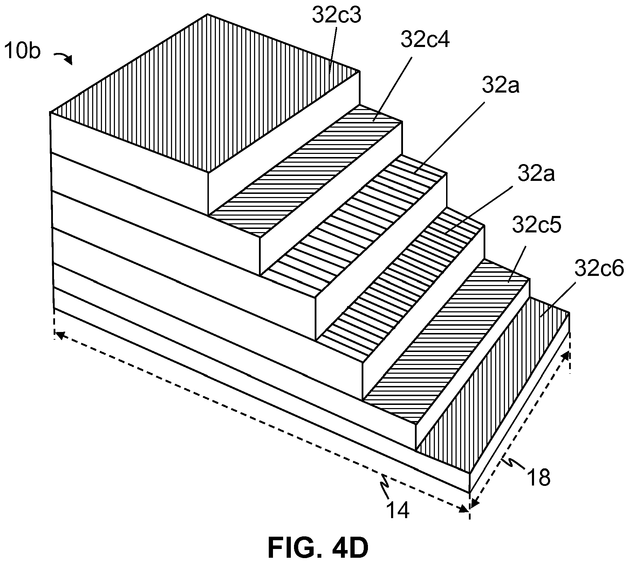

Referring now to FIGs. 4A-D, shown is a second embodiment 10b of the present laminates. Laminate 10b can be substantially similar to laminate 10a, with the primary exceptions described below. Laminate 10b includes, in addition to two laminae having fibers aligned in the first direction (e.g., 0-degree unidirectional laminae 32a), two laminae having fibers aligned in the second direction (e.g., 32c4 and 32c5), and two laminae having fibers aligned in the third direction (e.g., 32c3 and 32c6). And these laminae are arranged such that laminate 10b's inner section 64 includes each of the laminae having fibers aligned in the first direction, and laminate 10b's outer sections, 68a and 68b, include each of the laminae having fibers aligned in the second or third directions. More particularly, each of outer sections 68a and 68b includes one of the laminae having fibers aligned in the second direction and one of the laminae having fibers aligned in the third direction. Such a lay-up, too, may provide increased resistance to deflection.

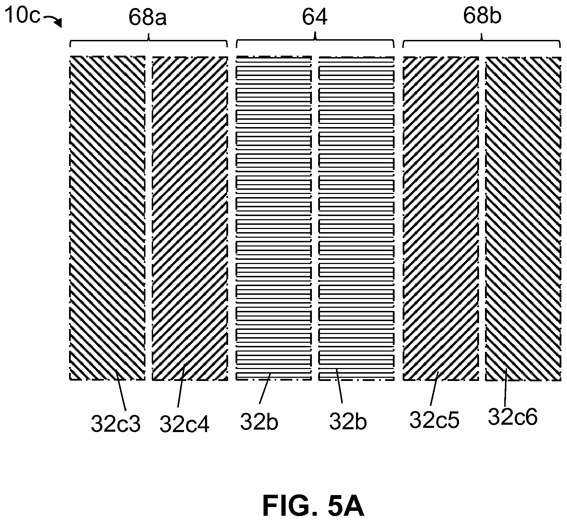

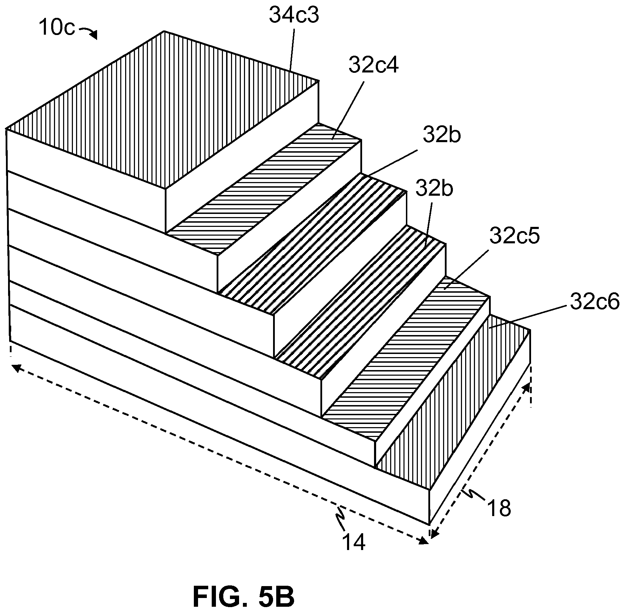

Referring now to FIGs. 5A and 5B, shown is a third embodiment 10c of the present laminates. Laminate 10c can be substantially similar to laminate 10b, except that the two laminae having fibers aligned in the first direction are 0-degree unidirectional laminae (e.g., 32b).

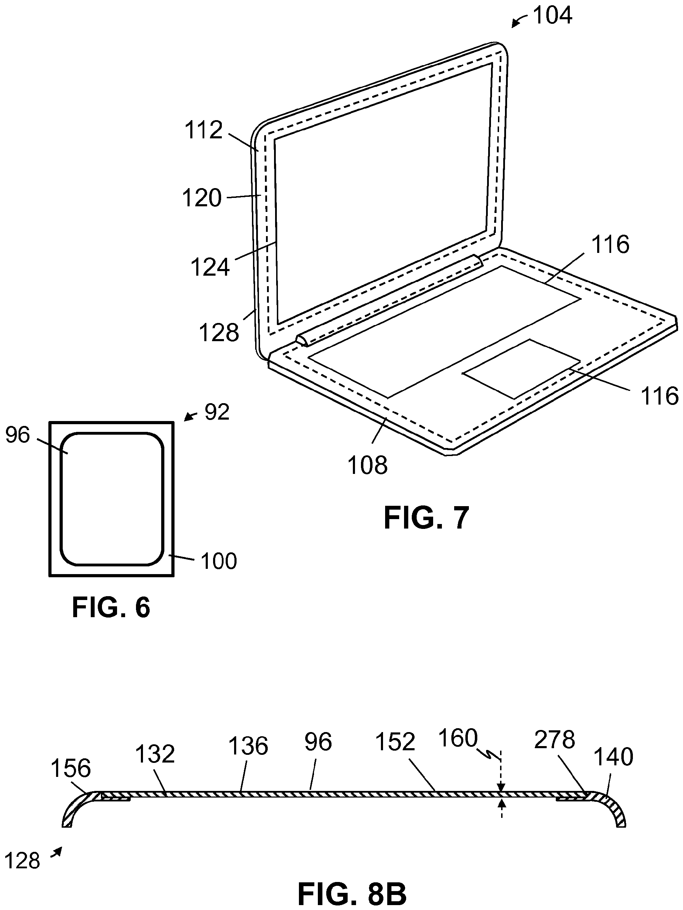

Referring now to FIG. 6, shown is an article 92 including one of the present laminates 96 (which can be any of the laminates described herein, including laminate 10a, 10b, or 10c). Article 92 can be any suitable article, such as, for example, a frame, beam, plate, panel, automobile-car or truck-component (e.g., door, hood, bumper, cross beam, A-, B-, C-, or D-pillar, engine cover, battery casing, seat structure, or the like), an interior and/or exterior side, floor, or roof panel, door, or the like of a trailer, bus, train, airplane, or boat, other bus or train component (e.g., window frame or the like), other airplane component (e.g., wing, body, tail, stabilizer, window frame, or the like), other boat component (e.g., hull, deck, window frame, or the like), electronic device housing ("housing," as used herein, encompasses a frame) (e.g., hard disk or solid state drive housing, display-such as a television or monitor-frame, or the like), PED housing (e.g., laptop, tablet, mobile phone, portable music player, and/or the like housing), and/or the like, including a portion-rather than the entirety-of any of the above. While article 92 is shown as including one laminate 96, article 92 (and others) can include any suitable number of the present laminates, such as, for example, 1, 2, 3, 4, 5, or more laminates.

Article 92 can include a body 100 coupled to laminate 96. Body 100 can: (1) facilitate attachment of the article to a structure by, for example, defining one or more holes, protrusions, clips, fasteners, lips, ridges, recesses, and/or the like; (2) protect laminate 96 by, for example, surrounding and/or encapsulating at least a portion of the laminate; and/or (3) strengthen and/or stiffen article 92 via its material and/or structure (e.g., the body can define ribs that extend along the laminate). Body 100 can comprise any suitable material, such as, for example, a polymeric material (including any described herein), a metal (e.g., aluminum, magnesium, iron, an alloy thereof, such as steel, and/or the like), and/or the like. And body 100 can be coupled to laminate 96 in any suitable fashion, which suitability may depend on the material of the body. To illustrate, if body 100 comprises a polymeric material, the body can be molded onto laminate 96 (e.g., via overmolding, compression molding, or the like), and, if the body comprises a polymeric material, a metal, and/or the like, the body can be coupled to the laminate via an adhesive, one or more fasteners, interlocking features of the body and the laminate, and/or the like. Some articles may not include such a body; for example, such articles can consist of one or more laminates.

Referring now to FIG. 7, shown is a schematic perspective view of an exemplary one of the present articles: laptop housing 104. Laptop housing 104 includes a base 108 and a lid 112 that can be movably (e.g., hingedly) coupled to the base. Each of base 108 and lid 112 can be characterized as a thin-walled shell configured to receive laptop components. For example, laptop components receivable by base 108 can include a processor, motherboard, power supply, user-input device(s) (e.g., a keyboard, touchpad, and/or the like), cooling fan(s), and/or the like. To facilitate operation of such laptop components once they are received by base 108, the base can define one or more openings 116 in communication with its interior (e.g., to allow user access to the user-input device(s), permit airflow to and/or from the cooling fan(s), allow external device(s) to be connected to the motherboard, and/or the like). Base 108 can comprise an assembly of two or more portions (e.g., an upper portion and a lower portion), to, for example, facilitate receipt of such laptop components by the base (e.g., during assembly of a laptop including the base).

Laptop components receivable by lid 112 can include a screen, user-input device(s) (e.g., a camera, microphone, and/or the like), and/or the like. For example, lid 112 can include a frame 120 defining an opening 124, where a laptop screen can be coupled to the frame such that the screen is viewable by a user through the opening. To increase the stiffness and strength of lid 112, facilitate receipt of a laptop screen by the lid, and/or for aesthetic purposes, the lid can include an A-cover 128 (described in more detail below) configured to be coupled to frame 120. A-cover 128 can be coupled to frame 120 in any suitable fashion, such as, for example, via interlocking features of the A-cover and the frame (e.g., such as snap-fit connection(s)), fastener(s), adhesive, welding, and/or the like). In some embodiments, an A-cover (e.g., 128) of a lid (e.g., 112) can be unitary with a frame (e.g., 120) of the lid.

It is desirable for a laptop housing (e.g., 104) to be sufficiently stiff to protect components received by the laptop housing against damage as well as to be relatively small (e.g., thin-walled), light, and inexpensive. Some of the present laptop housings (e.g., 104) can achieve such advantageous characteristics by including one(s) of the present laminates. For example, in some of the present laptop housings (e.g., 104), laminate(s) 96 (e.g., again, 10a, 10b, 10c, or the like) can be disposed within, on, and/or can form at least a portion of a panel of the laptop housing (e.g., a panel of a base 108 and/or a panel of a lid 112). To illustrate, in laptop housing 104, such laminate(s) can be disposed within, on, and/or can form at least a portion of an upper panel and/or a lower panel of base 108 and/or lid 112 (generally indicated with dashed lines in FIG. 7).

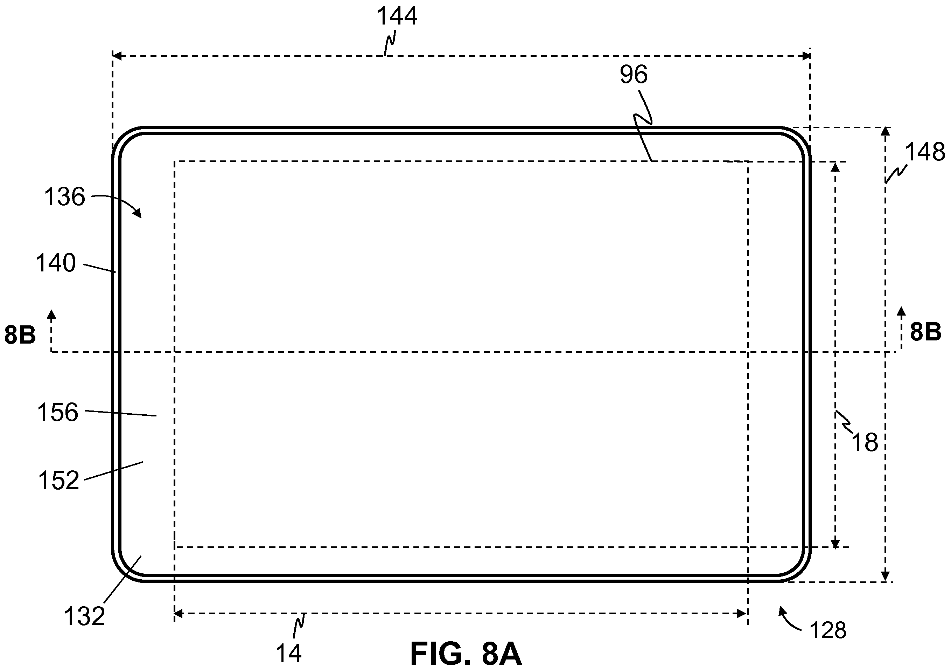

Referring additionally to FIGs. 8A and 8B, shown are bottom and cross-sectional end views of A-cover 128. A-cover 128 includes a plate 132. Plate 132 can have a planar portion 136 and a lip 140 that extends outwardly from and surrounds at least a majority of the planar portion. Plate 132 has a length 144 and a width 148 that is perpendicular to and smaller than the length. Length 144 and width 148 are each a distance measured between outer edges of plate 132 along a straight line. Length 144 can be measured along a line that bisects plate 132, is perpendicular to the outer edges of the plate through which it extends, is aligned with an axis about which lid 112 is rotatable relative to base 108, and/or the like. In this embodiment, plate 132 is rectangular, having rounded corners (e.g., and length 144 can be measured along a line that is aligned with its longest sides); however, in other embodiments, a plate (e.g., 132) can be triangular, rectangular, square, or otherwise polygonal (whether having sharp and/or rounded corners), circular, elliptical, or otherwise rounded, or can have an irregular shape.

A-cover 128 can include a composite body 152 that defines plate 132. Body 152 can be characterized as "composite" in that the body includes a plastic material 156 and a laminate 96, where the plastic material and the laminate are combined to form a unitary structure. As one non-limiting example, composite body 152 can be formed by overmolding plastic material 156 onto the laminate; in some embodiments, the laminate can be glued, welded, and/or the like to the plastic material. Plastic material 156 can include any suitable plastic material, including any one or more of the thermoplastic and thermoset materials described above. Plastic material 156 can include dispersed elements, such as, for example, discontinuous or short fibers (e.g., of any type described above), which can account for 10 to 70% of the plastic material by weight. In some embodiments, a plastic material (e.g., 156) can include the same material as a matrix material (e.g., 46) of the laminate, which can facilitate a bond between the plastic material and the laminate.

In this embodiment, laminate 96 can be positioned within composite body 152 such that the laminate is disposed within and/or on plate 132. More particularly, a length (e.g., 14) of the laminate can be aligned with length 144 of plate 132. The length of the laminate disposed within and/or on plate 132 can be at least 50% (up to and including 100%) of length 144 of the plate (e.g., at least 50, 55, 60, 65, 70, 75, 80, 85, 90, or 95% of the length of the plate). A width (e.g., 18) of the laminate disposed within and/or on plate 132 can be at least 50% (up to and including 100%) of width 148 of the plate (e.g., at least 50, 55, 60, 65, 70, 75, 80, 85, 90, or 95% of the width of the plate). A thickness (e.g., 22) of the laminate disposed within and/or on plate 132 can be at least 50% (up to and including 100%) of a thickness 160 (FIG. 8B) of the plate (e.g., at least 50, 55, 60, 65, 70, 75, 80, 85, 90, or 95% of the thickness of the plate). Outer surface(s) of plate 132 can be defined by plastic material 156 and/or laminate 96.

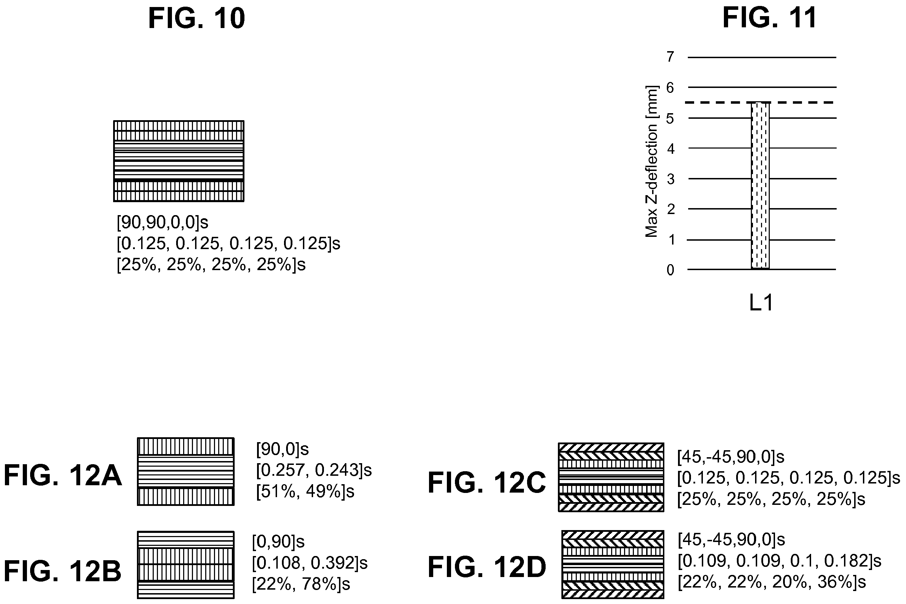

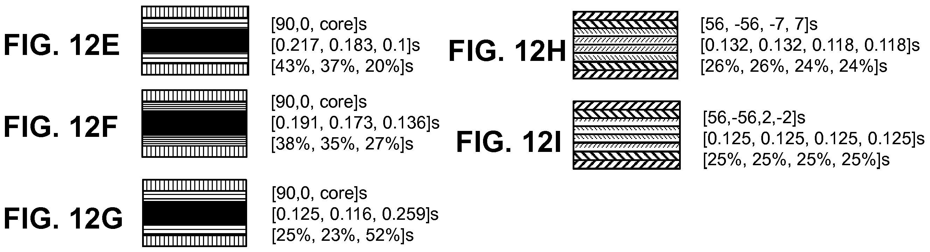

The present disclosure also includes sandwich composites that comprise ones of the present laminates disposed on opposing sides of a core (e.g., such a core is depicted in FIGs. 12E-12G). The core can include, for example, foam, a honeycomb structure, a non-woven arrangement of fibers, and/or the like. Ones of the present articles (e.g., 92, 104, and the like) can comprise ones of the present laminates by comprising one or more of the present sandwich composites.

Some of the present laminates comprise a length, a width that is perpendicular to the length, and a stack of laminae, each comprising matrix material and fibers that are dispersed within the matrix material and aligned in one of a first direction, a second direction that is angularly disposed relative to the first direction by a first angle that is between 10 and 80 degrees, and a third direction that is angularly disposed relative to the first direction by a second angle that is equal and opposite to the first angle, wherein, for each of the directions, at least one of the laminae includes fibers that are aligned in the direction, and wherein none of the laminae includes fibers that are aligned in a fourth direction that is perpendicular to the first direction. In some laminates, the stack consists of the laminae. In some laminates, the laminate consists of the stack. In some laminates, the stack is symmetrical.

In some laminates, the stack comprises an inner section comprising one or more of the lamina(e) including fibers that are aligned in the first direction and first and second outer sections disposed on opposing sides of the inner section, each of the outer sections comprising one or more of the lamina(e) including fibers that are aligned in the second direction and one or more of the lamina(e) including fibers that are aligned in the third direction. In some laminates, the inner section comprises each of the lamina(e) including fibers that are aligned in the first direction. In some laminates, a thickness of the inner section is approximately equal to a thickness of the first outer section plus a thickness of the second outer section.

In some laminates, each of the laminae is a unidirectional lamina. In some laminates, at least one of the laminae includes fibers aligned in the second direction and fibers aligned in the third direction that are woven with the fibers aligned in the second direction.

In some laminates, the first direction is parallel to one of the length and the width. In some laminates, the first angle is between 35 and 60 degrees. In some laminates, the first angle is approximately 56 degrees. In some laminates, each of the laminae comprises a length that is substantially equal to the length of the laminate and a width that is substantially equal to the width of the laminate.

Some of the present portable electronic device housings comprise a composite plate comprising a length and a width, the plate including a plastic material and one of the present laminates coupled to the plastic material, wherein the length of the laminate is parallel to the length of the plate. In some housings, the plate includes a planar portion and a lip that extends outwardly from and surrounds at least a majority of the planar portion.

### EXAMPLES

The present invention will be described in greater detail by way of specific examples. The following examples are offered for illustrative purposes only and are not intended to limit the invention in any manner. Those of skill in the art will readily recognize a variety of noncritical parameters that can be changed or modified to yield essentially the same results.

### EXAMPLE 1

### Deflection Simulation

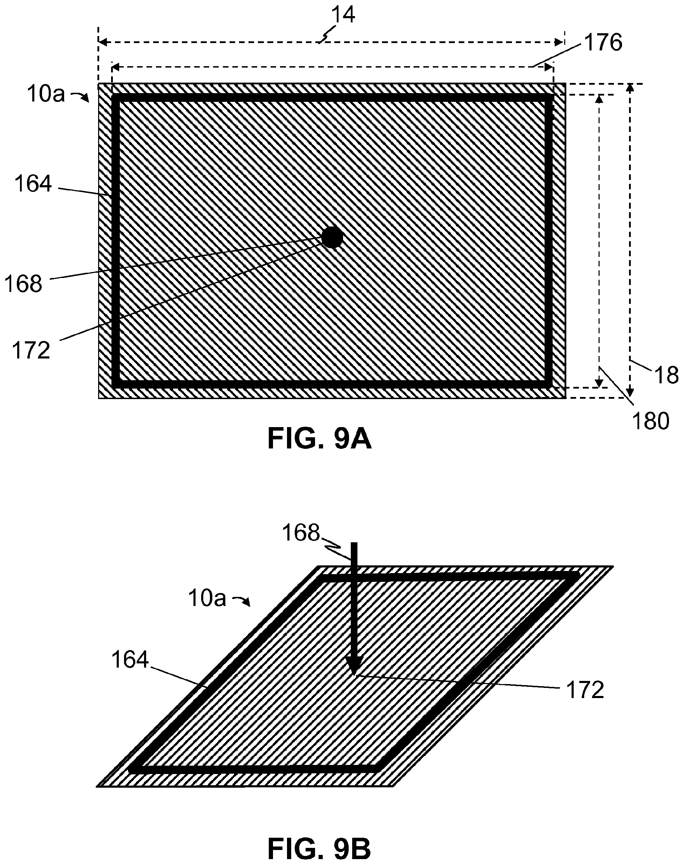

Deflection of each of several laminates (L1-L12, discussed below) was simulated. As shown in FIGs. 9A and 9B, in each simulation, the laminate (e.g., 10a) was modelled with its sides simply supported by a frame 164. A perpendicular load 168 of 100 newtons (N) was applied to, and the deflection was measured at, the laminate's center 172. In all cases, the laminate had a length 14 of 33.5 cm and a width 18 of 23.0 cm, and the frame had a length 176 of 31.0 cm and a width 180 of 21.0 cm. The simulations were all performed using ABAQUS.

### EXAMPLE 2

### Laminates L1-L12 and their Maximum Deflections

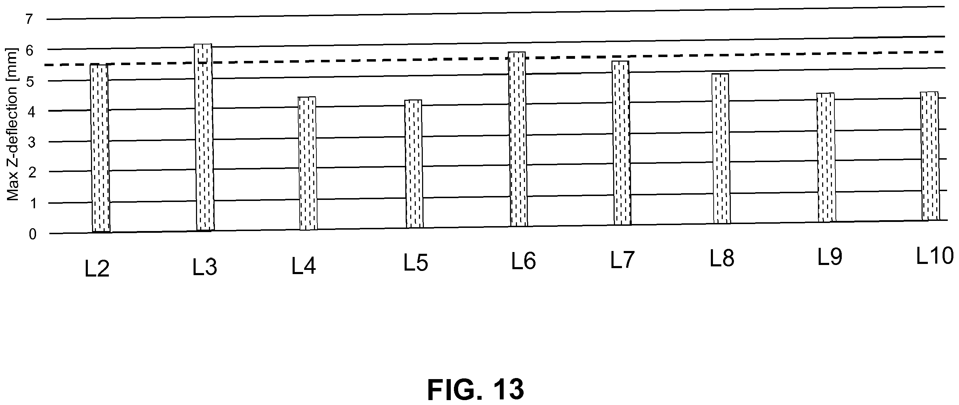

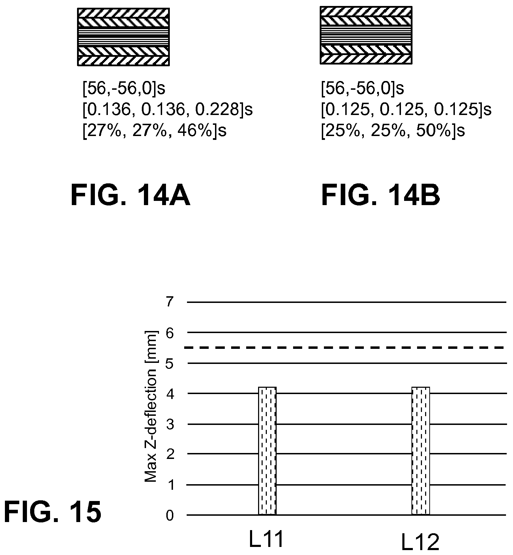

The deflection simulation described in EXAMPLE 1 was performed for laminates having various lay-ups and thicknesses to determine the effect that those parameters had on laminate stiffness. Twelve laminates were tested: Laminate 1-Laminate 12 ("L1"-"L12," respectively). For each of L1-L12, the fiber-reinforced laminae each comprised carbon fibers dispersed in a polycarbonate matrix material and had a fiber volume fraction of 50%. L6-L8 were sandwich composites that included fiber-reinforced laminae disposed on opposing sides of an isotropic core having a modulus of elasticity of 8 gigapascals (GPa). All of the laminates had a thickness of 1 mm. Being a traditional cross-ply laminate, L1's (FIG. 10) maximum deflection (FIG. 11 and the dashed line in FIGs. 13 and 15) was used as a baseline to assess the performance of L2-L12 (FIGs. 13 and 15). The lay-ups and laminae thicknesses of L1-L12 are included in TABLE 1.

**TABLE 1: Parameters of L1-L12**

| **Laminate** | **Lay-Up** | **Laminae Thicknesses (mm)** | **Laminae Thicknesses Relative to Half of Laminate Thickness** | **Maximum Deflection Relative to L1's** |
|---|---|---|---|---|
| L1 | [90°, 90°, 0°, 0°]s | all 0.125 | [25%, 25%, 25%, 25%ls | 0.0% |
| L2 | [90°, 0°]s | [0.257, 0.243]s | [51%, 49%ls | -0.2% |
| L3 | [0°, 90°]s | [0.108, 0.3921s | [22%, 78%]s | 10.6% |
| L4 | [+45°, -45°, 90°, 0°]s | all 0.125 | [25%, 25%, 25%, 25%ls | -22.0% |
| L5 | [+45°, -45°, 90°, 0°]s | [0.109,0.109, 0.1, 0.182]s | [22%, 22%, 20%, 36%ls | -23.8% |
| L6 | [90°, 0°, core]s | [0.217, 0.183, 0.1]s | [43%, 37%, 20%]s | 3.3% |
| L7 | [90°, 0°, core]s | [0.191, 0.173, 0.136]s | [38%, 35%, 27%]s | -2.3% |
| L8 | [90°, 0°, core]s | [0.125, 0.116, 0.259]s | [25%, 23%, 52%]s | -10.8% |
| L9 | [+56°, -56°, -7°, +7°]s | [0.132, 0.132, 0.118, 0.1181s | [26%, 26%, 24%, 24%]s | -24.1% |
| L10 | [+56°, -56°, +2°, - 2°]s | all 0.125 | all 25% | -24.0% |
| L11 | [+56°, -56°, 0°]s | [0.136, 0.136, 0.228]s | [27%, 27%, 46%]s | -24.1% |
| L12 | [+56°, -56°, 0°]s | all 0.125 | [33%, 33%, 33%]s | -24.0% |

L2, like L1, was essentially half 0° laminae and half 90° laminae by thickness; unsurprisingly, L2 and L1 performed nearly identically. Though otherwise similar to L2, L3 included a larger proportion by thickness of 90° plies (78%) than 0° plies (22%). This difference resulted in a marked increase in maximum deflection_more than 0.5 mm-for L3 over L2, which highlights the role that each of the fiber orientations plays in increasing laminate stiffness: reducing the collective thickness of the 0° laminae decreased L3's stiffness in a way that was not offset by increasing the collective thickness of the 90° laminae by the same amount.

Turning to L4 and L5, large decreases in maximum deflection (more than a millimeter) were obtained with the addition of off-axis (i.e., non-0° and non-90°) laminae. As can be seen by comparing L4 and L5, this improvement did not appear to be particularly sensitive to changes in laminae thicknesses.

L9 and L10, and particularly L10, were nearly-if not-triaxial; for each of these laminates, its laminae each substantially had one of three fiber orientations: +56°, -56°, or 0°. Despite lacking 90° laminae, L9 and L10 surprisingly performed nearly identically to L4 and L5. And like L4 and L5, the stiffnesses of L9 and L10 appeared to be relatively insensitive to laminae thickness changes (compare L9 and L10). To eliminate the effect of L9's and L10's deviations from purely triaxial laminates (e.g., the former's +7° and -7° laminae, and the latter's +2° and -2° laminae), the deflections of L11 and L12-consisting of only +56°, -56°, and 0° laminae-were simulated, and the advantageous results remained (FIG. 15).

While the performance of L11 and L12 was much the same as that of L4, L5, L9, and L10, the former have a notable advantage: by including only three-rather than four-fiber orientations, their manufacture is simpler. And taking advantage of the relative insensitivity of L11's and L12's stiffnesses to variations in laminae thicknesses, L12 provides advantages over L11 because each of L12's laminae has the same thickness. To illustrate, it is possible to produce each laminae of L12 using the same material, such as the same roll of unidirectional tape.

Finally, sandwich composites L6-L8 were significantly outperformed by each of L4, L5, L9, L10, L11, and L12.

The above specification and examples provide a complete description of the structure and use of illustrative embodiments. Although certain embodiments have been described above with a certain degree of particularity, or with reference to one or more individual embodiments, those skilled in the art could make numerous alterations to the disclosed embodiments without departing from the scope of this invention. As such, the various illustrative embodiments of the methods and systems are not intended to be limited to the particular forms disclosed. Rather, they include all modifications and alternatives falling within the scope of the claims, and embodiments other than the one shown may include some or all of the features of the depicted embodiment. For example, elements may be omitted or combined as a unitary structure, and/or connections may be substituted. Further, where appropriate, aspects of any of the examples described above may be combined with aspects of any of the other examples described to form further examples having comparable or different properties and/or functions, and addressing the same or different problems. Similarly, it will be understood that the benefits and advantages described above may relate to one embodiment or may relate to several embodiments.

The claims are not intended to include, and should not be interpreted to include, means-plus- or step-plus-function limitations, unless such a limitation is explicitly recited in a given claim using the phrase(s) "means for" or "step for," respectively.

## Claims

1. A laminate comprising:
a stack of laminae comprising:
a length;
a width that is perpendicular to the length; and
a thickness that is perpendicular to each of the length and the width;
wherein each of the laminae comprises:
a matrix material; and
a plurality of fibers dispersed within the matrix material and aligned in one of:
a first direction;
a second direction that is angularly disposed relative to the first direction by a first angle that is between 10 and 80 degrees;
a third direction that is angularly disposed relative to the first direction by a second angle that is equal and opposite to the first angle; and
a fourth direction that is perpendicular to the first direction;
wherein, for each of the first, second, and third directions, at least one of the laminae includes fibers that are aligned in the direction; and
wherein:
none of the laminae includes fibers that are aligned in the fourth direction; or
one(s) of the laminae including fibers that are aligned in the fourth direction account for less than 10%, optionally less than 5%, of the thickness of the stack.

2. The laminate of claim 1, wherein none of the laminae includes fibers that are aligned in the fourth direction.

3. The laminate of claim 1 or 2, wherein the stack consists of the laminae.

4. The laminate of claim 3, wherein the laminate consists of the stack.

5. The laminate of any of claims 1-4, wherein the stack comprises:
an inner section comprising one or more of the lamina(e) including fibers that are aligned in the first direction; and
first and second outer sections disposed on opposing sides of the inner section, each of the outer sections comprising:
one or more of the lamina(e) including fibers that are aligned in the second direction; and
one or more of the lamina(e) including fibers that are aligned in the third direction.

6. The laminate of claim 5, wherein the inner section comprises each of the lamina(e) including fibers that are aligned in the first direction.

7. The laminate of claim 6, wherein a thickness of the inner section is approximately equal to a thickness of the first outer section plus a thickness of the second outer section.

8. The laminate of any of claims 1-7, wherein each of the laminae is a unidirectional lamina.

9. The laminate of any of claims 1-8, wherein at least one of the laminae includes:
fibers aligned in the second direction; and
fibers aligned in the third direction that are woven with the fibers aligned in the second direction.

10. The laminate of any of claims 1-9, wherein the first direction is parallel to one of the length and the width.

11. The laminate of any of claims 1-10, wherein the first angle is between 35 and 60 degrees.

12. The laminate of any of claims 1-11, wherein each of the laminae comprises:
a length that is substantially equal to the length of the stack; and
a width that is substantially equal to the width of the stack.

13. A sandwich composite comprising:
a first laminate of any of claims 1-12; and
a second laminate of any of claims 1-12;
wherein the first and second laminates are disposed on opposing sides of a core.

14. A portable electronic device housing comprising:
a composite plate comprising a length and a width, the plate including:
a plastic material; and
the laminate of any of claims 1-13 coupled to the plastic material;
wherein the length of the stack is parallel to the length of the plate.

15. The housing of claim 14, wherein the plate includes a planar portion and a lip that extends outwardly from and surrounds at least a majority of the planar portion.
